# EUROPEAN PATENT APPLICATION

(11) **EP 3 085 238 A1**
(43) Date of publication of application: **26.10.2016**
(21) Application number: 14872239.0
(22) Date of filing: 05.12.2014
(51) Int. Cl.: A21D 13/08, A21D 2/16

(54) **CAKE AND METHOD FOR PRODUCING SAME**

(30) Priority: 17.12.2013 JP 2013259722
(71) Applicant: The Nisshin Oillio Group, Ltd., Chuo-ku Tokyo 104-8285 (JP)
(72) Inventor: SAKURADA, Miho, Yokosuka-shi Kanagawa 239-0832 (JP); EBISAWA, Yasuo, Yokosuka-shi Kanagawa 239-0832 (JP)
(74) Representative: Dennemeyer & Associates S.A.
(86) International application number: PCT/JP2014/082205
(87) International publication number: WO 2015/093312

(57) **Abstract**

An object of the present invention is to provide cake with the moist texture, the soft melting mouthfeel, and the good aroma, whose shape is not largely broken after the baking, and a method of manufacturing the same. According to the present invention, the cake obtained by thermal coagulation and a method of manufacturing the same is provided, the cake containing 10 to 40 mass% of oils and fats in batter. The oils and fats contain triacylglycerol including a medium-chain fatty acid with 6 to 10 carbons as a constituent fatty acid by 50 mass% or more relative to the oils and fats.

## Description

### TECHNICAL FIELD

### <Cross Reference>

This application claims priority from Japanese Patent Application No. 2013-259722 filed with the Japan Patent Office on December 17, 2013, the entire content of which is hereby incorporated by reference.

The present invention relates to cake and a method of manufacturing the same. More specifically, the present invention relates to cake with the moist texture, the soft melting mouthfeel, and the good aroma, whose shape is not largely broken after the baking, and a method of manufacturing the same.

### BACKGROUND ART

Cake generally refers to confectionery manufactured by heating, for example baking or steaming, batter obtained by mixing wheat flour, egg, milk, sugar, and other raw materials. Cake with various textures can be made by changing the components of the raw materials, the manufacturing method, or the like. People have recently wanted to enjoy a wider variety of tastes and in view of this, cake with the moist and soft texture and the good melting mouthfeel has been desired.

Heating, for example baking and steaming, the cake causes moisture evaporation or thermal coagulation, thereby causing the cake to lose the soft texture. One way to make the cake maintain the soft texture even after the thermal coagulation is to make the batter contain more moisture or fats and less protein or starch. This can relieve the roughness of the texture caused by the thermal coagulation. The batter containing more moisture or fats and less protein or starch, however, easily causes the concentration gradient when placed still. This makes it difficult to provide the cake with the soft texture stably. In view of this, Patent Literature 1 has suggested the method of manufacturing cake with the soft texture by mixing the emulsifier for foods, such as glycerol mono-fatty acid ester or glycerol organic acid fatty acid ester; however, the satisfying soft texture has not been achieved yet.

Moreover, Patent Literature 2 has suggested the method of manufacturing cake with the soft texture by mixing one kind or two or more kinds selected from the group consisting of lactic fermented egg white, cream, butter, and emulsified oils and fats. Patent Literature 3 has suggested the method where a particular processed egg white which has been lactic fermented is mixed. These methods, however, require the lactic fermentation, which needs time and effort. In view of this, the easier method for providing the soft texture has been desired.

In addition, Patent Literature 4 has suggested the method of manufacturing cake such as madeleine by adding oils and fats containing triacylglycerol including the medium-chain fatty acid with 6 to 10 carbons. However, this method requires the fractionated palm soft oil. Thus, the oils and fats to be added to the batter contain a small amount of medium-chain fatty acid. In this point, this method is essentially different from the present invention.

### CITATION LIST

### PATENT LITERATURE

PATENT LITERATURE 1: JP-A-2006-075137
PATENT LITERATURE 2: JP-A-2010-220565
PATENT LITERATURE 3: JP-A-2010-268704
PATENT LITERATURE 4: JP-A-2009-148225

### SUMMARY

### PROBLEMS TO BE SOLVED BY THE INVENTION

An object of the present invention is to provide cake with the moist texture, the soft melting mouthfeel, and the good aroma, whose shape is not largely broken after the baking, and a method of manufacturing the same.

### SOLUTION TO THE PROBLEMS

The present inventors have made concerted studies on the method of manufacturing cake with the soft texture by adding oils and fats. As a result, it has been found out that the cake with the moist texture, the soft melting mouthfeel, and the good aroma, whose shape is not largely broken after the baking, can be obtained when a particular amount of triacylglycerol including a medium-chain fatty acid with 6 to 10 carbons is added as oils and fats to the batter. The present invention has thus been completed. In addition, it has been found out that the batter containing a particular amount of triacylglycerol including a medium-chain fatty acid with 6 to 10 carbons is thin and smooth, so that the batter can be easily weighed and poured into a mold.

Thus, according to one aspect of the present invention, cake obtained by thermal coagulation can be provided, the cake containing 10 to 40 mass% of oils and fats in batter. The oils and fats contain triacylglycerol including a medium-chain fatty acid with 6 to 10 carbons as a constituent fatty acid by 50 mass% or more relative to the oils and fats.

According to the preferable aspect of the present invention, the provided cake can be gateaux chocolate.

Further, according to one aspect of the present invention, a method of manufacturing cake including: adding oils and fats by 10 to 40 mass% to raw materials of batter (the oils and fats contain triacylglycerol including a medium-chain fatty acid with 6 to 10 carbons as a constituent fatty acid by 50 mass% or more relative to the oils and fats); and weighing the batter obtained by adding the oils and fats by 10 to 40 mass% to the raw materials of batter, pouring the batter into a mold, and thermally coagulating the batter can be provided.

Further, according to one aspect of the present invention, a texture modifier for cake obtained by thermal coagulation can be provided, the texture modifier containing triacylglycerol including a medium-chain fatty acid with 6 to 10 carbons as an active ingredient.

### EFFECTS OF THE INVENTION

According to the present invention, by the use of triacylglycerol including the medium-chain fatty acid with 6 to 10 carbons as a part of the oils and fats included in the cake batter, the cake with the moist texture, the soft melting mouthfeel, and the good aroma, whose shape is not largely broken after the baking, can be manufactured easily. This can provide the cake that meets the demand of people who have been unsatisfied with the existing cake and the method of manufacturing the same. Further, the cake batter obtained by mixing triacylglycerol including the medium-chain fatty acid with 6 to 10 carbons is thin and smooth, and easily weighed and easily poured into the mold. For these reasons, the batter is suitable for the mass production and therefore can be used for the industrial purposes.

### BRIEF DESCRIPTION OF THE DRAWINGS

Fig. 1 illustrates the baked cake according to Example 1.
Fig. 2 illustrates the baked cake according to Comparative Example 1.

### DESCRIPTION OF THE EMBODIMENTS

The cake according to the present invention is hereinafter described in order. The term "cake" in the present invention refers to the cake manufactured by thermally coagulating the batter, which is obtained by mixing raw materials such as wheat flour and egg. The cake may be any cake formed by thermal coagulation without particular limitation. Examples thereof include sponge cake, chiffon cake, butter cake, gateaux chocolate, cheese cake, pancake, Japanese sponge cake (Castella), and donuts. Above all, gateaux chocolate containing much oil is particularly preferable. The cake according to the present invention does not include steamed cake such as steamed cake or Chinese steamed bun.

A method of thermally coagulating the cake according to the present invention is not particularly limited and may be, for example, baking or steaming with a pan or an oven, frying with a fryer, or microwave cooking with a microwave oven.

Oils and fats used for the cake according to the present invention may be edible oils, margarine, fat spread, shortening, or the like, and one kind or two or more kinds thereof are used. Among these, margarine and fat spread include extra materials such as water or seasoning, in addition to oils and fats. In the case of using such extra materials, the amount of such materials is added to the amount of oils and fats. The cake batter according to the present invention contains the oils and fats by 10 to 40 mass%. The cake according to the present invention contains the oils and fats by preferably 10 to 30 mass% and more preferably 10 to 20 mass%.

The oils and fats in the cake according to the present invention do not include oils and fats derived from oil-containing raw materials other than the oils and fats to be mixed. For example, cocoa mass contain oils and fats (cocoa butter) by approximately 55 mass%, cocoa powder contain oils and fats (cocoa butter) by approximately 11 mass%, and whole milk powder contain oils and fats (milk fat) by approximately 25 mass%. If chocolate is mixed in the cake batter, the oils and fats by approximately 30 mass% of the entire chocolate are included in the batter. In the present invention, however, such oils and fats are not included in the oils and fats included in the cake.

Triacylglycerol including the medium-chain fatty acid with 6 to 10 carbons (hereinafter also referred to as "MTG") needs to be included in the cake according to the present invention so that MTG is contained by 50 mass% or more of the oils and fats in the cake. The oils and fats contain preferably 50 to 100 mass%, more preferably 60 to 90 mass%, of this triacylglycerol.

As described above, the oils and fats in the cake according to the present invention contain triacylglycerol including the medium-chain fatty acid with 6 to 10 carbons as the constituent fatty acid. This triacylglycerol may be triacylglycerol including only the medium-chain fatty acid with 6 to 10 carbons as the constituent fatty acid, or may be mixed acid group triacylglycerol including the medium-chain fatty acid with 6 to 10 carbons as the constituent fatty acid. The binding position of each medium-chain fatty acid to glycerin is not particularly limited. In the case of the mixed acid group triacylglycerol, the fatty acid other than the fatty acid with 6 to 10 carbons may be included in a part of the constituent fatty acids. For example, this mixed acid group triacylglycerol may include the long-chain fatty acid. The oils and fats used in the present invention may be, for example, a mixture of oils and fats with a plurality of different molecular species, such as a mixture of trioctanoylglycerol and tridecanoylglycerol. Here, the medium-chain fatty acid with 6 to 10 carbons is preferably the straight-chained saturated fatty acid.

The triacylglycerol including the medium-chain fatty acid in the cake according to the present invention is preferably triacylglycerol including only the medium-chain fatty acid with 6 to 10 carbons as the constituent fatty acid (this triacylglycerol is also referred to as "MCT"). The content amount of MCT in MTG is preferably 30 mass% or more, more preferably 50 mass% or more, much more preferably 60 mass% or more. MCT particularly preferably includes only the medium-chain fatty acid with 8 or 10 carbons as the constituent fatty acid.

MCT included in the oils and fats in the cake according to the present invention can be manufactured by a known method. For example, MCT can be manufactured in a manner that the fatty acid with 6 to 10 carbons and glycerol are subjected to dehydrating and condensing through heat treatment at 120°C to 180°C with the catalyst, preferably without the catalyst, in accordance with the normal method, and this reaction occurs preferably under reduced pressure.

The cake according to the present invention may include any other oil and fat raw materials as long as the oils and fats and triacylglycerol including the medium-chain fatty acid with 6 to 10 carbons are included in the cake batter in the amount within the above range. The oil and fat raw materials that can be used are, for example, coconut oil, palm kernel oil, palm oil, fractionated palm oil (such as palm olein and palm super olein), shea fat, fractionated shea oil, sal fat, fractionated sal oil, illipe fat, soybean oil, rape-seed oil, cotton-seed oil, safflower oil, sunflower oil, rice oil, corn oil, sesame oil, olive oil, milk fat, and cocoa butter, and a mixed oil and a processed oil thereof.

The cake according to the present invention preferably contains saccharides in addition to the oils and fats. The saccharides that can be used are: sucrose (sugar, powdered sugar), lactose, glucose, fructose, maltose, reduced sugar syrup, liquid sugar, enzyme converted syrup, isomerized sugar syrup, sucrose bound syrup, reduced sugar polydextrose, oligosaccharide, sorbitol, reduced lactose, trehalose, xylose, xylitose, maltitol, erythritol, mannitol, raffinose, and dextrin. The cake batter according to the present invention contains saccharides by preferably 10 to 60 mass%, more preferably 10 to 50 mass%, and much more preferably 10 to 40 mass%.

The cake according to the present invention may include the raw materials that are usually used for the cake, in addition to the oils and fats and saccharides. Specific examples of the raw materials that can be used include cereal flour such as wheat flour and rice flour, raw starches such as corn starch, potato starch, and tapioca starch, starches that have been subjected to physical/enzymatic/chemical process, eggs such as whole egg, egg white, antibacterial egg, frozen egg, condensed egg, and dried egg of domestic fowls, nuts such as almond, nut paste, and nut powder, fruits such as fruit, fruit juice, fruit paste, and dried fruit, vegetables such as vegetable, vegetable juice, vegetable paste, and dried vegetable, dairy products such as milk, condensed milk, milk powder, milk protein, fermented milk, and cheese, soybeans such as soybean milk and soybean protein, protein material such as gelatin, polysaccharide thickener such as xanthan gum, gellan gum, guar gum, tamarind gum, pectin, carrageenan, agar, konjac mannan, and carboxymethylcellulose sodium, flavoring agents such as a vanilla flavoring agent and a fruit flavoring agent, colorants such as a gardenia pigment, emulsifiers such as saccharide fatty acid ester and glycerin fatty acid ester, pH adjusters such as potassium bitartrate, acidifiers such as citric acid and lactic acid, rising agents such as baking powder and sodium bicarbonate, salts such as sodium chloride, dietary fiber, alcohols, coffee, tea, green tea, cocoa, chocolate, caramel, and the like.

The cake according to the present invention can be manufactured by mixing oils and fats containing triacylglycerol including the medium-chain fatty acid with 6 to 10 carbons in accordance with the known method. Specifically, first, the raw materials including wheat flour, eggs, sugar, and milk and oils and fats containing triacylglycerol including the medium-chain fatty acid with 6 to 10 carbons are stirred and mixed with a whipper, a whisk, a mixer, or the like as necessary to prepare a mixture. The resulting mixture is poured into a mold or shaped, and coagulated by heat treatment such as baking or frying.

As described above, triacylglycerol including the medium-chain fatty acid with 6 to 10 carbons according to the present invention modifies the cake into the cake having the moist and soft texture and the good melting mouthfeel. Therefore, the present invention also relates to a texture modifier for cake formed by thermal coagulation. This texture modifier contains triacylglycerol including the medium-chain fatty acid with 6 to 10 carbons as the active ingredient. As described below, by using the texture modifier for cake according to the present invention, the cake can have the moist and soft texture and the good melting mouthfeel. The texture modifier for cake according to the present invention may be any texture modifier containing triacylglycerol including the medium-chain fatty acid with 6 to 10 carbons described as the active ingredient. The texture modifier may additionally contain oils and fats such as soybean oil and rape-seed oil, an excipient such as dextrin or starch, or other quality modifier within the range not degrading the effect of the present invention. Examples

The present invention will hereinafter be described in more detail with reference to Examples and Comparative Examples but the present invention is not limited thereto. In the description below, "%" refers to mass% unless otherwise stated.

### <Analysis method>

The content amount of triacylglycerol was measured based on AOCS Ce5-86. The content amount of each fatty acid was measured based on AOCS Ce1f-96.

### <Raw material oils and fats>

Triacylglycerol including the medium-chain fatty acid with 6 to 10 carbons is hereinafter abbreviated as "MTG". Of such triacylglycerol, triacylglycerol including only the medium-chain fatty acid with 6 to 10 carbons as the constituent fatty acid is abbreviated as "MCT".

### [MCT 1]

MCT (manufactured by Nisshin OilliO Group, Ltd.) including n-octanoic acid (with 8 carbons) and n-decanoic acid (with 10 carbons) as the fatty acids included in triacylglycerol at a mass ratio of 30 : 70 was used as MCT 1. Note that MCT 1 contains MTG by 100 mass%, and also contains MCT by 100 mass%.

### [MCT 2]

MCT 1 for 41.7 mass%, coconut hydrogenated oil (manufactured by Nisshin OilliO Group, Ltd., containing MTG by 53.2 mass%) for 32.9 mass%, fully hydrogenated high erucic rape-seed oil (manufactured by YOKOZEKI OIL & FAT INDUSTRIES CO., LTD. containing MTG by 0 mass%) for 0.5 mass%, interesterified oil (containing MTG by 13.2 mass%) for 8.3 mass%, which is obtained by chemically interesterifying mixed oil including 50 parts by mass of fully hydrogenated palm stearin oil and 50 parts by mass of fully hydrogenated palm kernel olein oil, an emulsifier for 0.4 mass%, water for 16.0 mass%, and salt for 0.2 mass% were mixed. The resulting mixture was plasticized by rapid cooling with a combinator in accordance with a normal method. Thus, the medium-chain margarine (manufactured by Nisshin OilliO Group, Ltd., product name: Risetta Soft) was obtained, and this was used as MCT 2. MCT 2 contains MTG by 60.3 mass% and MCT by 69.2 mass%.

### [LCT 1]

Salad oil (manufactured by Nisshin OilliO Group, Ltd., product name: Nisshin salad oil) was used as LCT 1. LCT 1 contains MTG by 0 mass% and MCT by 0 mass%.

### [LCT 2]

Rape-seed oil (manufactured by Nisshin OilliO Group, Ltd., containing MTG by 0 mass%) for 41.7 mass%, palm mid fraction (manufactured by Nisshin OilliO Group, Ltd., containing MTG by 0 mass%) for 20.4 mass%, interesterified oil obtained by chemically interesterifying palm olein (containing MTG by 0 mass%) for 12.5 mass%, interesterified oil (containing MTG by 13.2 mass%) for 8.3 mass%, which is obtained by chemically interesterifying mixed oil including 50 parts by mass of fully hydrogenated palm stearin oil and 50 parts by mass of fully hydrogenated palm kernel olein oil, fully hydrogenated high erucic rape-seed oil (manufactured by YOKOZEKI OIL & FAT INDUSTRIES CO., LTD. containing MTG by 0 mass%) for 0.5 mass%, an emulsifier for 0.4 mass%, water for 16.0 mass%, and salt for 0.2 mass% were mixed. The resulting mixture was plasticized by rapid cooling with a combinator in accordance with a normal method. Thus, the long-chain margarine was obtained, and this was used as LCT 2. LCT 2 contains MTG by 1.1 mass% and MCT by 0 mass%.

### [Example 1]

### <Manufacture of gateaux chocolate>

Gateaux chocolate according to Example 1 and Comparative Example 1 was manufactured by the normal method in accordance with Table 1. Specifically, first, oils and fats, white soft sugar, sodium bicarbonate, and salt were mixed in the amount shown below, whereby a mixture 1 was obtained. Next, milk and chocolate melted in a hot water bath were mixed to provide a mixture 2. The mixtures 1 and 2 were put together. To the resulting mixture, whole egg was added and moreover, weak flour, cocoa powder, and brandy were mixed. Thus, the gateaux chocolate batter was obtained. The obtained batter was poured by every 30 g into a paper mold with a diameter of 4 cm and a height of 3.5 cm. The batter in the paper mold was baked in an oven at 150°C for 11 minutes, whereby the gateaux chocolate was manufactured.

**[Table 1]**

| [Table 1] Components of gateaux chocolate and evaluation | | | | |
|---|---|---|---|---|
| | Example 1 | | Comparative Example 1 | |
| Raw material | (g) | (%) | (g) | (%) |
| MCT1 | 55.0 | 6.5 | - | - |
| MCT2 | 55.0 | 6.5 | - | - |
| LCT1 | - | - | 55.0 | 6.5 |
| LCT2 | - | - | 55.0 | 6.5 |
| White soft sugar | 120.0 | 14.2 | 120.0 | 14.2 |
| Liquid sugar | 20.0 | 2.4 | 20.0 | 2.4 |
| Sodium bicarbonate | 1.5 | 0.2 | 1.5 | 0.2 |
| Salt | 0.5 | 0.1 | 0.5 | 0.1 |
| Chocolate | 200.0 | 23.7 | 200.0 | 23.7 |
| Milk | 120.0 | 14.2 | 120.0 | 14.2 |
| Brandy | 10.0 | 1.2 | 10.0 | 1.2 |
| Whole egg | 150.0 | 17.8 | 150.0 | 17.8 |
| Weak flour | 100.0 | 11.8 | 100.0 | 11.8 |
| Cocoa powder | 12.0 | 1.4 | 12.0 | 1.4 |
| Total of raw materials | 844.0 | 100.0 | 844.0 | 100.0 |
| Oil and fat content | 110.0 | 13.0 | 110.0 | 13.0 |
| MTG contained in oils and fats | 88.2 | 80.1 | 0.6 | 0.1 |

| Evaluation results | | | | |
|---|---|---|---|---|
| Texture | Excellent | | Not very good | |
| Aroma | Good | | Not very good | |

### <Evaluation on gateaux chocolate>

The gateaux chocolate according to Example 1 and Comparative Example 1 manufactured as above was evaluated in accordance with the evaluation method as below.

### <Evaluation method for gateaux chocolate>

### (1) Method of evaluating texture

Five experienced panelists evaluated totally the texture in accordance with the criteria below.
Excellent: moist texture and soft melting mouthfeel are good
Good: moist texture is a little good, but soft melting mouthfeel is not enough Not very good: moist texture and soft melting mouthfeel are normal
Poor: moist texture and soft melting mouthfeel are poor

### (2) Method of evaluating aroma

Five experienced panelists evaluated totally the aroma in accordance with the criteria below.
Good: good aroma
Not very good: weak aroma
Poor: not aromatic

As is clearly shown in Table 1, the gateaux chocolate manufactured using MCT 1 and 2 has the moist texture, the soft melting mouthfeel, and the good aroma as compared to the gateaux chocolate manufactured using LCT 1 and 2.

**[Table 2]**

| [Table 2] Specific gravity of gateaux chocolate batter | | |
|---|---|---|
| | Example 1 | Comparative Example 1 |
| Just after preparation | 1.02 | 0.98 |
| After 1.5 hours | 1.01 | 1.01 |

**[Table 3]**

| [Table 3] Viscosity of gateaux chocolate batter (unit: mPa·s) | | |
|---|---|---|
| | Example 1 | Comparative Example 1 |
| Just after preparation | 26,500 | 41,000 |
| After 1.5 hours | 20,250 | not lower than 100,000 |

As is clear from Tables 2 and 3, both products are not very different in specific gravity but are different largely in viscosity. That is to say, the batter manufactured using MCT 1 and 2 is featured in that the batter has lower viscosity and is thinner, and is more easily weighed and poured into a mold than the batter manufactured using LCT 1 and 2. The viscosity of the batter after 1.5 hours was measured. The results indicate that the viscosity of the batter manufactured using MCT 1 and 2 is not largely different but the viscosity of the batter manufactured using LCT 1 and 2 has increased to be twice or more. The batter manufactured using MCT 1 and 2 remains thin for a long time, and this is very important in the mass production. Just after the preparation, the batter is both at about 26°C, and after 1.5 hours, the batter is both at about 22°C.

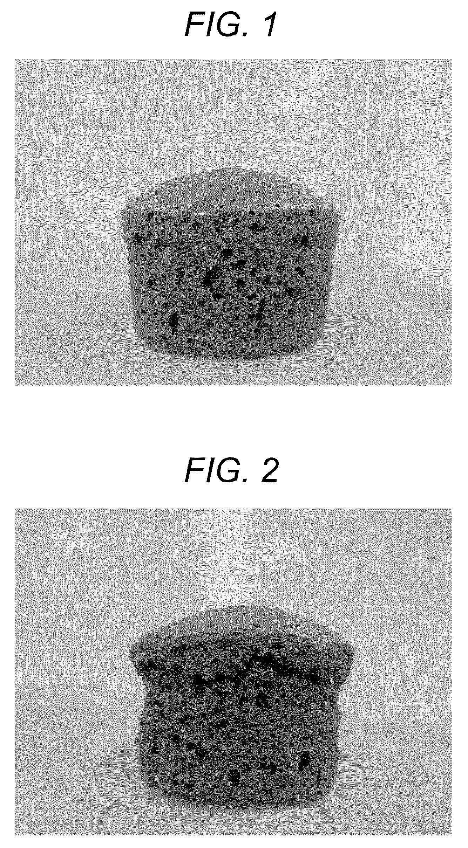

In addition, as is clear from Fig. 1 (Example 1) and Fig. 2 (Comparative Example 1), the comparison between the baked products of the both indicates that the gateaux chocolate made of MCT 1 and 2 is not deformed and maintains its shape but the gateaux chocolate made of LCT 1 and 2 is deformed and does not look good.

## Claims

1. Cake obtained by thermal coagulation, containing 10 to 40 mass% of oils and fats in batter, wherein the oils and fats contain triacylglycerol including a medium-chain fatty acid with 6 to 10 carbons as a constituent fatty acid by 50 mass% or more relative to the oils and fats.

2. The cake according to claim 1, wherein the cake is gateaux chocolate.

3. A method of manufacturing cake, comprising:
adding oils and fats by 10 to 40 mass% to raw materials of batter (the oils and fats contain triacylglycerol including a medium-chain fatty acid with 6 to 10 carbons as a constituent fatty acid by 50 mass% or more relative to the oils and fats); and
weighing the batter obtained by adding the oils and fats by 10 to 40 mass% to the raw materials of batter, pouring the batter into a mold, and thermally coagulating the batter.

4. A texture modifier for cake obtained by thermal coagulation, containing triacylglycerol including a medium-chain fatty acid with 6 to 10 carbons as an active ingredient.
